# EUROPEAN PATENT APPLICATION

(11) **EP 2 942 861 A1**
(43) Date of publication of application: **11.11.2015**
(21) Application number: 14790476.7
(22) Date of filing: 03.03.2014
(51) Int. Cl.: H02K 49/02

(54) **MULTIFUNCTION ELECTROMAGNETIC RETARDER**

(71) Applicant: TBK Co., Ltd., Machida-shi, Tokyo 194-0045 (JP)
(72) Inventor: KATO, Yukihiro, Machida-shi Tokyo 194-0045 (JP); MIYOSHI, Akihiro, Machida-shi Tokyo 194-0045 (JP); OBA, Mitsuyoshi, Machida-shi Tokyo 194-0045 (JP)
(74) Representative: Kronthaler, Wolfgang N.K.
(86) International application number: PCT/JP2014/055277
(87) International publication number: WO 2015/132854

(57) **Abstract**

1. An electromagnetic type retarder having a main portion of the electromagnetic type retarder consisting of a stator yoke, of a plurality of magnetic coils forming multi-phase connections, and of a steel rotor; a control device;, a driving device for a high revolution region consisting of transistors opened and closed by a drive pulse for the high revolution region issued from the control device, respectively; and a driving device for a low revolution region consisting of a battery, of a diode for preventing a reverse current, and of transistors opened and closed by a drive pulse for the low revolution region issued from the control device, respectively. The magnetic coils of each phase are connected with capacitors so as to form a resonance circuit, respectively. Each of the transistors for the high revolution region is connected in series to each of the multi-phase connections. Each of the transistors for the low revolution region is connected in series to each of the multi-phase connections through the battery and the diode. The electromagnetic type retarder is characterized in that at the high revolution region, the magnetic coils are excited by an electric power obtained from a braking energy, and that at the low revolution region, the magnetic coils are excited by an electric power obtained from the battery.

## Description

### FIELD OF THE INVENTION

The present invention relates to an electromagnetic type retarder with multi-functions, and more particularly, relates to an electromagnetic type retarder wherein at a high revolution region, magnetic coils are excited by an electric power obtained from a braking energy.

### BACK GROUND ART

In a conventional electromagnetic type retarder, magnetic coils are excited by an electric power obtained from a braking energy, so that an electric power source for exciting the magnetic coils can be eliminated.

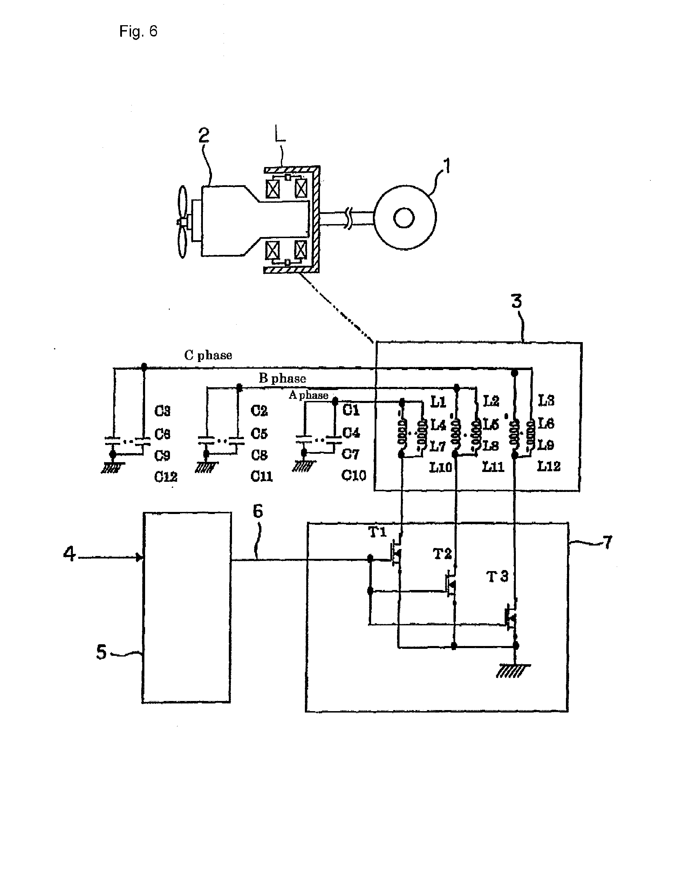

FIG.6 to FIG.8 show the conventional electromagnetic type retarder. In FIG. 6, a reference numeral 1 denotes a tire of a car, 2 denotes an engine, 3 denotes a main portion of the electromagnetic type retarder, 4 denotes an operation signal, 5 denotes a control device for processing the operation signal 4, 6 denotes a drive pulse issued from the control device 5, and 7 denotes a driving device consisting of transistors T1 to T3 opened and closed by the drive pulse 6, respectively.

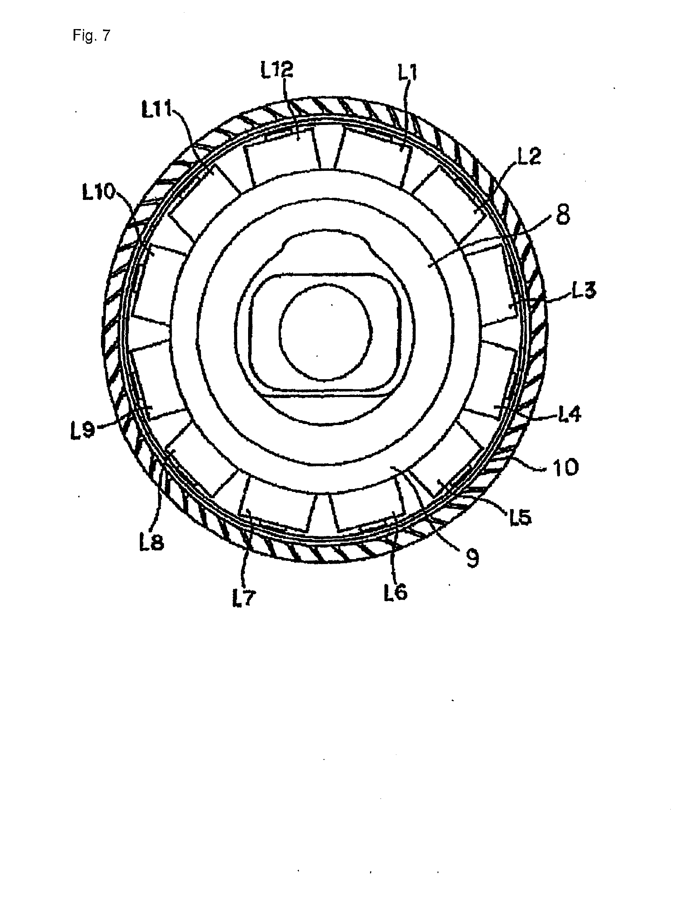

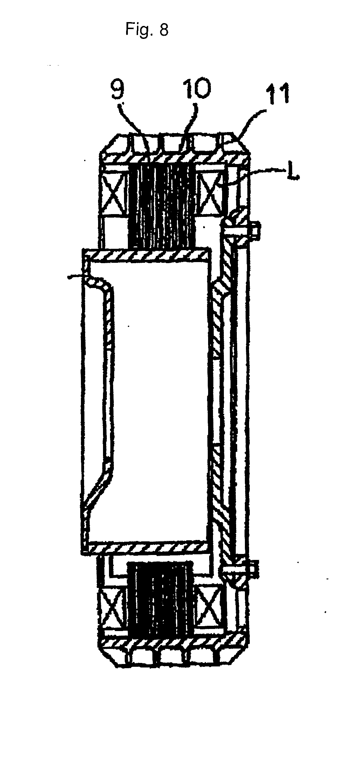

As shown in FIG. 7 and FIG. 8, the main portion 3 consists of a stator 8, of a stator yoke 9 surrounding the stator 8, of a magnetic coil L having magnetic coils L1 to L12 arranged along a circle and spaced apart from one another on the stator yoke 9, of a steel rotor (drum) 10 surrounding the stator yoke 9 and rotated according to the rotation of the tire 1, each of the magnetic coils L1 to L12 having an iron core therein, and of fins 11 provided on the outer peripheral surface of the steel rotor 10. The magnetic coils L1 to L12 form three-phase connections of A phase, B phase and C phase.

Each of the magnetic coils L1, L2, L3, L7, L8 and L9 is opposite in polarity to each of the magnetic coils L4, L5, L6, L10, L11 and L12. The transistor T1 of the driving device 7 is connected in series to the A phase connection consisting of coils L1, L4, L7 and L10. The transistor T2 is connected in series to the B phase connection consisting of coils L2, L5, L8 and L11. The transistor T3 is connected in series to the C phase connection consisting of coils L3, L6, L9 and L12.

According to the conventional retarder, the drive pulse 6 is generated when the operation signal 4 is applied to the control device 5, so that the transistors T1 to T3 of the driving device 7 are turned ON, and resonance circuits consisting of magnetic coils L1 to L12 and capacitors C1 to C12 are formed.

An electric voltage induced in the magnetic coils by the residual magnetic field of the steel rotor 10 becomes a three-phase AC voltage of a specific frequency by the function of the resonance circuits consisting of the magnetic coils and the capacitors, when the revolution number of the steel rotor 10 becomes faster than that of the rotary magnetic field calculated from the resonance frequency of the magnetic coils and the capacitors. In this state, an eddy current is generated in the steel rotor 10 according to the difference between the revolution number Ns of the rotary magnetic field generated by the three-phase AC voltage and the revolution number Nd of the steel rotor 10. By the eddy current generated in the steel rotor 10, the voltage of the magnetic coils is increased, so that the eddy current generated in the steel rotor 10 is further increased. The increase of the eddy current function is stopped at a point that the magnetic field is not increased even if the voltage of magnetic coils is increased. The eddy current in the steel rotor 10 generates a joule heat, so that a larger braking power is applied to the steel rotor 10. The braking power is converted into heat and the heat is radiated into the atmosphere from the fins 11 provided on the outer peripheral surface of the steel rotor 10.

### SUMMARY OF THE INVENTION

### The task to be solved by the invention

In the conventional electromagnetic type retarder, the magnetic coils are excited by an electric power obtained from a braking energy, so that an electric power source for exciting the magnetic coils can be eliminated. However, at the low revolution region, the electric power obtained from the braking energy is insufficient, so that the braking torque becomes small.

An object of the present invention is to obviate the above defects. Manner for solving the task.

An electromagnetic type retarder with multi-functions according to the present invention comprises a main portion of an electromagnetic type retarder consisting of a stator yoke, of a plurality of magnetic coils arranged along a peripheral direction of the stator yoke spaced apart from one another so as to form three-phase connections, each of the magnetic coils having an iron core therein, and of a steel rotor surrounding the stator yoke and rotated according to the rotation of a tire; a control device having a detector for detecting a revolution number of the steel rotor; a driving device for a high revolution region consisting of three transistors opened and closed by a drive pulse for the high revolution region issued from the control device, respectively, wherein the magnetic coils of each phase connection are connected with capacitors so as to form a resonance circuit, respectively, and each of the transistors for the high revolution region is connected in series to each of the three-phase connections; and a driving device for a low revolution region consisting of a battery, of a diode for preventing a reverse current, and of three transistors opened and closed by a drive pulse for the low revolution region issued from the control device, respectively, wherein each of the three transistors for the low revolution region is connected in series to each of the three-phase connections through the battery and the diode; and characterized in that at the high revolution region, the magnetic coils are excited by an electric power obtained from a braking energy, and that at the low revolution region, the magnetic coils are excited by an electric power obtained from the battery.

In the electromagnetic type retarder of the present invention, the three-phase connections are formed of a three-phase star connection.

In the electromagnetic type retarder of the present invention, the three-phase connections are formed of a three-phase delta connection.

An electromagnetic type retarder with multi-functions of the present invention comprises a main portion of the electromagnetic type retarder consisting of a stator yoke, of a plurality of magnetic coils arranged along a peripheral direction of the stator yoke spaced apart from one another so as to form three-phase connections, each of the magnetic coils having an iron core therein, and of a steel rotor surrounding the stator yoke and rotated according to the rotation of a tire; a control device having a detector for detecting a revolution number of the steel rotor; a driving device for a high revolution region consisting of two transistors opened and closed by a drive pulse for the high revolution region issued from the control device, respectively, wherein the magnetic coils of each phase connection are connected with capacitors so as to form a resonance circuit, respectively, and each of the transistors for the high revolution region is connected in series to each of the two-phase connections among the three-phase connections, and a driving device for a low revolution region consisting of a battery, of a diode for preventing a reverse current, and of three transistors opened and closed by a drive pulse for the low revolution region issued from the control device, respectively, wherein each of the three transistors for the low revolution region is connected in series to each of the three-phase connections through the battery and the diode; and characterized in that at the high revolution region, the magnetic coils are excited by an electric power obtained from a braking energy, and that at the low revolution region, the magnetic coils are excited by an electric power obtained from the battery.

An electromagnetic type retarder with multi-functions of the present invention comprises a main portion of the electromagnetic type retarder consisting of a stator yoke, of a plurality of magnetic coils arranged along a peripheral direction of the stator yoke spaced apart from one another so as to form two-phase connections, each of the magnetic coils having an iron core therein, and of a steel rotor surrounding the stator yoke and rotated according to the rotation of a tire; a control device having a detector for detecting a revolution number of the steel rotor; a driving device for a high revolution region consisting of a transistor opened and closed by a drive pulse for the high revolution region issued from the control device, wherein the magnetic coils of each phase connection are connected with capacitors so as to form a resonance circuit, respectively, and the transistor for the high revolution region is connected in series to one of the two-phase connections, and a driving device for a low revolution region consisting of a battery, of a diode for preventing a reverse current, and of two transistors opened and closed by a drive pulse for the low revolution region issued from the control device, respectively, wherein each of the two transistors for the low revolution region is connected in series to each of the two-phase connections through the battery and the diode; and characterized in that at the high revolution region, the magnetic coils are excited by an electric power obtained from a braking energy, and that at the low revolution region, the magnetic coils are excited by an electric power obtained from the battery.

In the electromagnetic type retarder of the present invention, the two-phase connections are formed of a two-phase V-connection.

An embodiment of an electromagnetic type retarder with multi-functions according to the present invention will be explained with reference to the drawings.

Parts of the retarder according to the present invention which are similar to corresponding parts of the conventional retarder shown in FIG.6 to FIG.8 have been given corresponding reference numerals and need not be further redescribed.

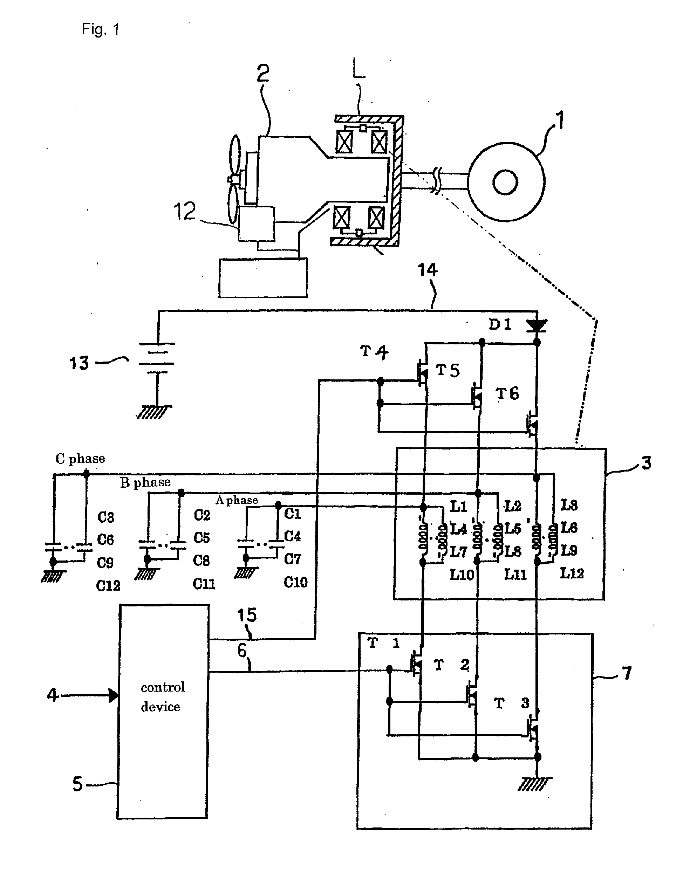

An electromagnetic type retarder of an embodiment of the present invention comprises, as shown in FIG. 1, a control device 5 having a detector for detecting a revolution number of a tire 1, an alternator 12, a battery 13, a diode D1 for proventing a reverse current, a driving device 7 having transistors T1 to T3, and a driving device 14 for a low revolution region having transistors T4 to T6. The transistor T4 in the driving device 14 is connected in series to an A phase connection consisting of the magnetic coils L1, L4, L7 and L10 through the battery 13 and the diode D1, the transistor T5 in the driving device 14 is connected in series to a B phase connection consisting of the magnetic coils L2, L5, L8 and L11 through the battery 13 and the diode D1, and the transistor T6 in the driving device 14 is connected in series to a C phase connection consisting of the magnetic coils L3, L6, L9 and L12 through the battery 13 and the diode D1. At the high revolution region, the transistors T1 to T3 are opened and closed by a drive pulse 6 issued from the control device 5, respectively, and the magnetic coils are excited by an electric power obtained from a braking energy. At the low revolution region, the transistors T4 to T6 are opened and closed by a drive pulse 15 issued from the control device 5, respectively, and the magnetic coils are excited by an electric power obtained from the battery.

As stated above, at the high revolution region, in the electromagnetic retarder according to the present invention, an electric power of a high voltage can be obtained, so that it is not necessary to increase abilities of the alternator 12 and the battery 13.

At the low revolution region, the transistors T4 to T6 in the driving device 14 are opened and closed by the drive pulse 15 issued from the control device 5, and an electric power is applied from the battery 13 to the magnetic coils through the diode D1 for preventing the reverse current, so that a sufficient control torque can be obtained.

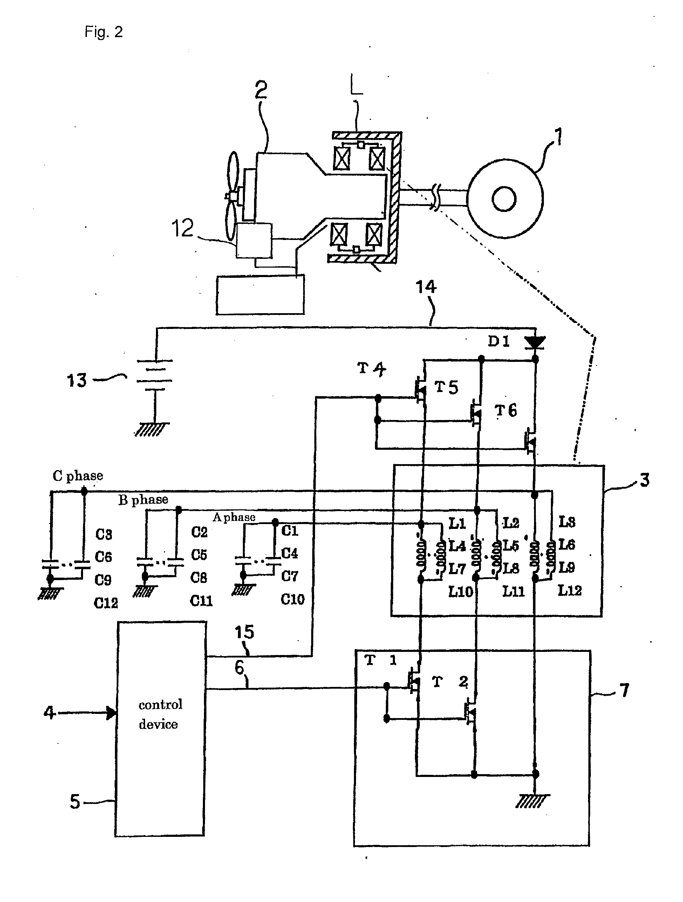

An electromagnetic type retarder of another embodiment of the present invention comprises, as shown in FIG.2, a driving device 7, an alternator 12, a battery 13, a diode D1 for preventing a reverse current, and a driving device 14 having transistors T4 to T6. The driving device 7 can be formed by eliminating the transistor T3 from the driving device 7 of the conventional electromagnetic type retarder shown in FIG. 6. The transistor T4 in the driving device 14 is connected in series to the A phase connection consisting of the magnetic coils L1, L4, L7 and L10 through the battery 13 and the diode D1, the transistor T5 in the driving device 14 is connected in series to the B phase connection consisting of the magnetic coils L2, L5, L8 and L11, through the battery 13 and the diode D1, and the transistor T6 in the driving device 14 is connected in series to the C phase connection consisting of the magnetic coils L3, L6, L9 and L12 through the battery 13 and the diode D1. At the high revolution region, transistors T1 to T2 in the driving device 7 are opened and closed by a drive pulse 6 issued from a control device 5, respectively, so that a sufficient electric power is generated. At the low revolution region, the transistors T4 to T6 in the driving device 14 are opened and closed by a drive pulse 15 issued from the control device 5, respectively, and the magnetic coils are excited by an electric power from the battery 13, so that a sufficient braking torque is generated.

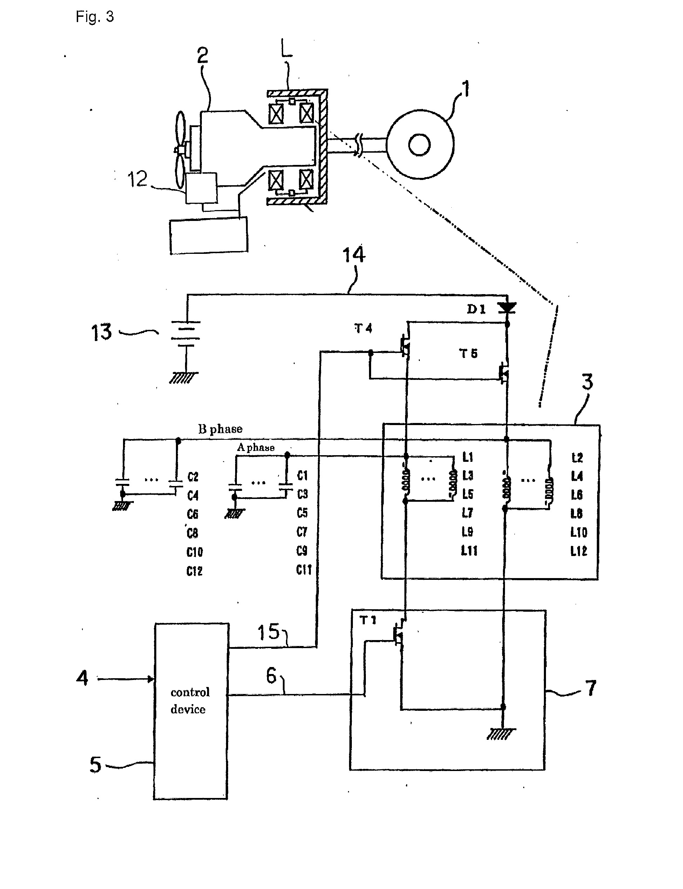

In an electromagnetic type retarder of the other embodiment of the present invention, as shown in FIG. 3, an A phase connection is formed by magnetic coils L1, L3, L5, L7, L9 and L11, and a B phase connection is formed by magnetic coils L2, L4, L6, L8, L10 and L12. A driving device 7 is formed by a transistor T1 connected in series to the A phase, and opened and closed by a drive pulse 6 issued from a control device 5 at a high revolution region. A driving device 14 is formed by transistors T4 and T5. The transistor T4 is connected in series to the A phase through a battery 13 and a diode D1, and the transistors T5 is connected in series to the B phase through the battery 13 and the diode D1.

The A phase and the B phase connections form a two-phase V-connection.

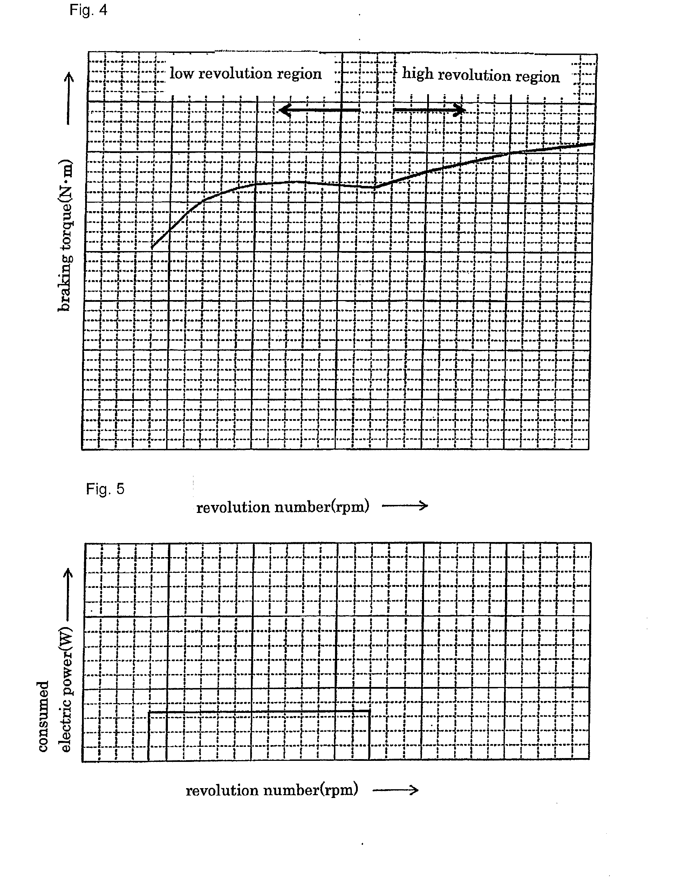

FIG. 4 is a graph depicting the relationship of a braking torque and the revolution number of the rotor of the electromagnetic type retarder according to the present invention. FIG. 5 is a graph depicting the relationship of a consumed electric power and the revolution number of the rotor of the electromagnetic type retarder according to the present invention.

### EFFECT OF THE INVENTION

According to the electromagnetic type retarder of the present invention, following effects can be obtained.
(1) In the electromagnetic type retarder according to the present invention, a sufficient braking torque can be generates at the low revolution region, so that such a problem in the conventional electromagnetic type retarder that the braking torque is small at the low revolution region can be solved.
(2) The electromagnetic type retarder according to the present invention can be formed by adding merely a diode and transistors to the conventional electromagnetic type retarder wherein the magnetic coils are excited by an electric power obtained from the braking energy, a weight is not so increased, and a high control torque can be obtained at low and high revolution ranges.
(3) It is not necessary to increase the power of the battery or the alternator in order to increase the braking torque of the electromagnetic type retarder.
(4) An electromagnetic type retarder generating a high braking torque with low consumed electric power at a low revolution range can be obtained.

### BRIEF DESCRIPTION OF THE DRAWINGS

[FIG.1] A schematic depiction of an electromagnetic type retarder according to an embodiment of the present invention.
[FIG.2] A schematic depiction of an electromagnetic type retarder according to an another embodiment of the present invention.
[FIG.3] A schematic depiction of an electromagnetic type retarder according to the other embodiment of the present invention.
[FIG.4] A graph depicting the relationship of a braking torque and the revolution number of the rotor of the electromagnetic type retarder according to the present invention.
[FIG.5] A graph depicting the relationship of a consumed electric power and the revolution number of the rotor of the electromagnetic type retarder according to the present invention.
[FIG.6] A schematic depiction of a conventional electromagnetic type retarder.
[FIG.7] A vertically sectional front view of a main portion of the conventional electromagnetic type retarder shown in FIG.6.
[FIG.8] A vertically sectional side view of a main portion of the conventional electromagnetic type retarder shown in FIG.6.

### EXPLANATION OF CORD

1 tire
2 engine
3 main portion of retarder
4 operation signal
5 control device
6 drive pulse
7 driving device
8 stator
9 stator yoke
10 steel rotor
11 fin
12 alternator
13 battery
14 driving device
15 drive pulse

## Claims

1. An electromagnetic type retarder with multi-functions comprising a main portion of the electromagnetic type retarder consisting of a stator yoke, of a plurality of magnetic coils arranged along a peripheral direction of the stator yoke spaced apart from one another so as to form three-phase connections, each of the magnetic coils having an iron core therein, and of a steel rotor surrounding the stator yoke and rotated according to the rotation of a tire; a control device having a detector for detecting a revolution number of the steel rotor; a driving device for a high revolution region consisting of three transistors opened and closed by a drive pulse for the high revolution region issued from the control device, respectively, wherein the magnetic coils of each phase connection are connected with capacitors so as to form a resonance circuit, respectively, and each of the transistors for the high revolution region is connected in series to each of the three-phase connections; and a driving device for a low revolution region consisting of a battery, of a diode for preventing a reverse current, and of three transistors opened and closed by a drive pulse for the low revolution region issued from the control device, respectively, wherein each of the three transistors for the low revolution region is connected in series to each of the three-phase connections through the battery and the diode; **characterized in that** at the high revolution region, the magnetic coils are excited by an electric power obtained from a braking energy, and that at the low revolution region, the magnetic coils are excited by an electric power obtained from the battery.

2. The electromagnetic type retarder as claimed in claim 1, wherein the three-phase connections are formed of a three-phase star connection.

3. The electromagnetic type retarder as claimed in claim 1, wherein the three-phase connections are formed of a three-phase delta connection.

4. An electromagnetic type retarder with multi-functions comprising a main portion of the electromagnetic type retarder consisting of a stator yoke, of a plurality of magnetic coils arranged along a peripheral direction of the stator yoke spaced apart from one another so as to form three-phase connections, each of the magnetic coils having an iron core therein, and of a steel rotor surrounding the stator yoke and rotated according to the rotation of a tire; a control device having a detector for detecting a revolution number of the steel rotor; a driving device for a high revolution region consisting of two transistors opened and closed by a drive pulse for the high revolution region issued from the control device, respectively, wherein the magnetic coils of each phase connection are connected with capacitors so as to form a resonance circuit, respectively, and each of the transistors for the high revolution region is connected in series to each of the two-phase connections among the three-phase connections, and a driving device for a low revolution region consisting of a battery, of a diode for preventing a reverse current, and of three transistors opened and closed by a drive pulse for the low revolution region issued from the control device, respectively, wherein each of the three transistors for the low revolution region is connected in series to each of the three-phase connections through the battery and the diode; **characterized in that** at the high revolution region, the magnetic coils are excited by an electric power obtained from a braking energy, and that at the low revolution region, the magnetic coils are excited by an electric power obtained from the battery.

5. An electromagnetic type retarder with multi-functions comprising a main portion of the electromagnetic type retarder consisting of a stator yoke, of a plurality of magnetic coils arranged along a peripheral direction of the stator yoke spaced apart from one another so as to form two-phase connections, each of the magnetic coils having an iron core therein, and of a steel rotor surrounding the stator yoke and rotated according to the rotation of a tire; a control device having a detector for detecting a revolution number of the steel rotor; a driving device for a high revolution region consisting of a transistor opened and closed by a drive pulse for the high revolution region issued from the control device, wherein the magnetic coils of each phase connection are connected with capacitors so as to form a resonance circuit, respectively, and the transistor for the high revolution region is connected in series to one of the two-phase connections, and a driving device for a low revolution region consisting of a battery, of a diode for preventing a reverse current, and of two transistors opened and closed by a drive pulse for the low revolution region issued from the control device, respectively, wherein each of the two transistors for the low revolution region is connected in series to each of the two-phase connections through the battery and the diode; **characterized in that** at the high revolution region, the magnetic coils are excited by an electric power obtained from a braking energy, and that at the low revolution region, the magnetic coils are excited by an electric power obtained from the battery.

6. The electromagnetic type retarder as claimed in claim 5, wherein the two-phase connections are formed of a two-phase V-connection.
